(19) Europäisches Patentamt
European Patent Office
Office européen des brevets

(11) Veröffentlichungsnummer: **0 051 731**
**B1**

(12) # EUROPÄISCHE PATENTSCHRIFT

(45) Veröffentlichungstag der Patentschrift: **27.12.84**

(51) Int. Cl.³: **C 09 B 29/09** // D06P5/17

(21) Anmeldenummer: **81107516.7**

(22) Anmeldetag: **22.09.81**

(54) **Wasserunlöslicher Azofarbstoff, Verfahren zu seiner Herstellung und seine Verwendung.**

(30) Priorität: **27.09.80 DE 3036576**

(43) Veröffentlichungstag der Anmeldung: **19.05.82 Patentblatt 82/20**

(45) Bekanntmachung des Hinweises auf die Patenterteilung: **27.12.84 Patentblatt 84/52**

(84) Benannte Vertragsstaaten: **CH DE FR GB IT LI**

(56) Entgegenhaltungen:
**DE - A - 2 856 283**
**JP - A - 55 133 457**
**US - A - 4 271 071**

(73) Patentinhaber: **CASSELLA Aktiengesellschaft, Hanauer Landstrasse 526, D-6000 Frankfurt am Main 61 (DE)**

(72) Erfinder: **Tappe, Horst, Dr., Ringstrasse 9, D-6057 Dietzenbach (DE)**
Erfinder: **Roth, Kurt, Breckenheimerstrasse 35, D-6238 Hofheim (DE)**

(74) Vertreter: **Urbach, Hans-Georg, Dr., Hanauer Landstrasse 526, D-6000 Frankfurt am Main 61 (DE)**

**EP 0 051 731 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft den neuen, wasserlöslichen Azofarbstoff der Formel I

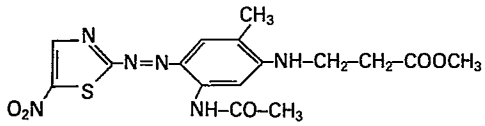
I

Der neue Farbstoff wird durch Diazotieren von 2-Amino-5-nitrothiazol und Kuppeln auf die Kupplungskomponente der Formel II hergestellt.

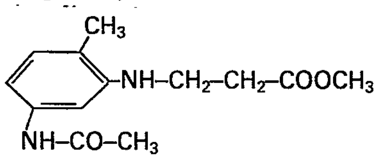
II

Die Kupplungskomponente der Formel II kann man leicht nach an sich bekannten Verfahren, wie z.B. in Organikum, S. 560 beschrieben, aus 2-Amino-4-acetylamino-toluol und Acrylsäuremethylester erhalten.

Der erfindungsgemässe Farbstoff der Formel I eignet sich vorzüglich zum Färben und Bedrucken von synthetischen, hydrophoben Fasermaterialien und Mischfungen dieser Fasermaterialien mit Cellulosefasern. Bevorzugte hydrophobe Fasermaterialien sind solche aus aromatischen Polyestern, Celluloseestern und Polyamiden, insbesondere Polyestern.

Das Bedrucken des genannten Fasergutes kann so durchgeführt werden, dass die mit dem neuen Farbstoff allein oder in Gemischen mit bekannten Dispersionsfarbstoffen bedruckte Ware in Gegenwart eines Carriers bei Temperaturen zwischen etwa 100 bis 110°C oder auch in Abwesenheit eines Carriers bei 110 bis 180°C gedämpft oder auch nach dem sogenannten Thermofixierverfahren bei 180 bis 230°C behandelt wird.

Das Färben des genannten Fasergutes mit dem erfindungsgemässen Farbstoff und mit Farbstoffmischungen, die den erfindungsgemässen Farbstoff enthalten, erfolgt zweckmässig aus wässriger Suspension in Gegenwart von Carriern zwischen 80 bis 100°C, in Abwesenheit von Carriern zwischen 100 bis 140°C sowie nach dem sogenannten Thermofixierverfahren bei etwa 180 bis 230°C. Der erfindungsgemässe Farbstoff eignet sich auch zum Färben der vorstehend aufgeführten hydrophoben Materialien aus organischen Lösungsmittel.

Besonders gut eignet sich der erfindungsgemässe Farbstoff für Ätzreserve-Verfahren auf Polyester, insbesondere solche, die unter Einsatz alkalischer Ätzmittel arbeiten, wie sie z.B. in den DE-OS 2836391 und 2856283 beschrieben sind.

Die erfindungsgemäss erhaltenen farbstarken Färbungen und Drucke zeichnen sich durch gute Allgemeinechtheiten, die Polyesterfärbungen beispielsweise durch gute Lichtechtheit und Aufbau und die Drucke durch gute Thermomigrierechtheit, vor allem bei der Ausrüstung mit Textilhilfsmitteln aus.

Beispiel

a) 15,2 g Natriumnitrit wurden portionsweise zu 100 ccm konzentrierter Schwefelsäure unter Rühren gegeben, wobei man die Temperatur der Reaktionsmischung auf 65°C ansteigen liess. Die Lösung wurde dann auf 5°C gekühlt, worauf man 200 ccm einer Mischung von 30 ccm Propionsäure und 170 ccm Essigsäure tropfenweise unter Umrühren zugab. Dabei liess man die Temperatur auf 15°C ansteigen, die man bei der restlichen Zugabe auf dieser Höhe hielt.

Die auf diese Weise hergestellte Nitrosylschwefelsäuremischung wurde auf 0 bis 5°C gekühlt, worauf 29 g (0,2 Mol) 2-Amino-5-nitrothiazol portionsweise unter Rühren zugegeben wurden. Danach wurden 200 ccm einer wie oben angegeben hergestellten Propionsäure-Essigsäure-Mischung zugegeben, wobei man die Temperatur der Reaktionsmischung auf 0 bis 5°C hielt. Die auf diese Weise erhaltene Reaktionsmischung wurde dann bei 0 bis 5°C 3 Stunden lang gerührt und das in der Mischung vorhandene überschüssige Natriumnitrit durch Zugabe von 10 bis 20 g Harnstoff zersetzt. Die so erhaltene klare Diazoniumlösung wird bei –10 bis –15°C einer Lösung von 63 g der Kupplungskomponente der Formel II in 320 ml iso-Butanol in 10 Minuten zugesetzt. Nach 2stündigem Nachrühren wird der Ansatz unter Rühren auf 5 l Eiswasser gegossen, der Farbstoff abfiltriert, neutral gewaschen und getrocknet.

b) 30 Teile des nach Absatz a) erhaltenen Farbstoffs der Formel I werden in feiner Verteilung zu einer Klotzflotte gegeben, die 937 Teile Wasser, 3 Teile Mononatriumphosphat, 10 Teile Natriumchlorat und 20 Teile eines Polymerisationsproduktes auf Acrylsäurebasis als Antimigrationsmittel auf 1000 Teile enthält. Mit dieser Klotzflotte wird ein Polyestergewebe auf Basis von Polyethylenglycolterephthalat geklotzt. Nach dem Trocknen wird das geklotzte Gewebe mit einer Druckpaste, die 600 Teile einer wässrigen, 10%igen Johannisbrotkernmehlätherverdickung, 120 Teile Wasser, 80 Teile Natriumcarbonat, 100 Teile Polyethylenglykol 400 und 100 Teile Glycerin auf 1000 Teile enthält überdruckt. Nach dem Fixieren mit überhitztem Dampf während 7 Minuten bei 175°C, Seifen, anschliessendem Spülen und Trocknen, erhält man einen marineblauen Ätzboden mit sehr guten Echtheiten. An den Stellen, auf die die sodahaltige Druckpaste aufgedruckt wird, erhält man einen sehr guten Weissfond mit scharfen Konturen.

c) 2,0 Teile des nach Absatz a) erhaltenen, feinzerteilten Farbstoffs der Formel I werden in 2000 Teile Wasser eingerührt. Es wird mit Essigsäure auf einen pH-Wert von 5 eingestellt und mit 4,0 Gewichtsteilen Ammoniumsulfat und 2,0 Teilen eines Naphthalinsulfonsäure-Formaldehyd-Kondensats versetzt.

In die so erhaltene Färbeflotte bringt man 100 Teile eines Polyestergewebes auf Basis Polyethylenglykolterephthalat und färbt eine Stunde bei 130°C.

Nach anschliessendem Spülen und Trocknen

erhält man farbstarke, marine-blaue Färbungen mit guten Echtheitseigenschaften.

**Patentansprüche**

1. Neuer, wasserlöslicher Azofarbstoff der Formel I

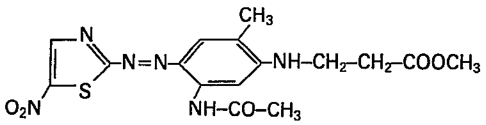
I

2. Verfahren zur Herstellung des Farbstoffs der Formel I des Anspruchs 1, dadurch gekennzeichnet, dass man 2-Amino-5-nitrothiazol diazotiert und auf die Kupplungskomponente der Formel II kuppelt.

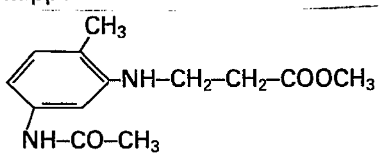
II

3. Verwendung des Farbstoffs des Anspruchs 1 zum Färben und Bedrucken von hydrophoben Fasermaterialien.

4. Verwendung des Farbstoffs des Anspruchs 1 zum Bedrucken von hydrophoben Fasermaterialien nach Ätzdruckverfahren, insbesondere unter Verwendung von alkalischen Ätzmitteln.

**Claims**

1. New water-insoluble azo dyestuff of the formula I

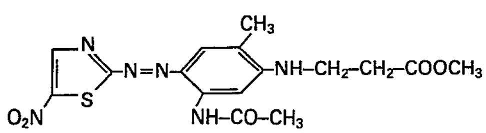
I

2. Process for the preparation of the dyestuff of the formula I, according to claim 1, characterised in that 2-amino-5-nitrothiazole is diazotised and coupled with the coupling component of the formula II

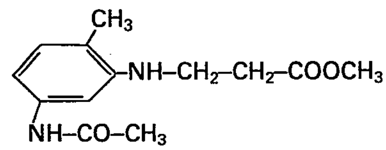
II

3. Use of the dyestuff according to claim 1 for dyeing and printing hydrophobic fibre materials.

4. Use of the dyestuff according to claim 1 for printing hydrophobic fibre materials by discharge printing processes, in particular with the use of alkaline discharge agents.

**Revendications**

1. Nouveau colorant azoïque insoluble dans l'eau, en l'espèce le colorant de formule I:

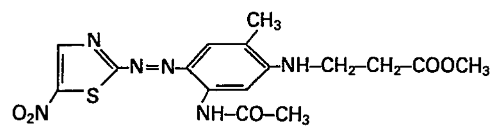
I

2. Procédé de préparation du colorant de formule I selon la revendication 1, procédé caractérisé en ce qu'on diazote l'amino-2 nitro-5 thiazole et on copule le diazoïque sur le copulant de formule II:

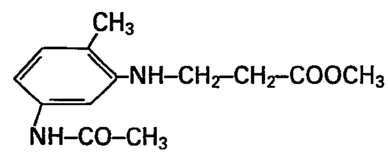
II

3. Application du colorant selon la revendication 1 à la teinture et à l'impression de matières fibreuses hydrophobes.

4. Application du colorant selon la revendication 1 à l'impression de matières fibreuses hydrophobes par des méthodes d'impression avec rongeage, plus particulièrement au moyen de rongeants alcalins.